# NEW EUROPEAN PATENT SPECIFICATION

(11) **EP 1 973 640 B2**
(45) Date of publication and mention of the opposition decision: **05.08.2015**
(45) Mention of the grant of the patent: 10.06.2009
(21) Application number: 06841115.6
(22) Date of filing: 22.12.2006
(51) Int. Cl.: B01J 8/02

(54) **APPARATUS FOR PRODUCING SYNTHESIS GAS**
VORRICHTUNG ZUR HERSTELLUNG VON SYNTHESEGAS
APPAREIL DE PRODUCTION DE GAZ DE SYNTHESE

(30) Priority: 10.01.2006 EP 06000429
(43) Date of publication of application: 01.10.2008
(73) Proprietor: CASALE SA, 6900 Lugano (CH)
(72) Inventor: ZANICHELLI, Luca, I-22010 Grandola ed Uniti (CO) (IT); FERRINI, Cristina, CH-6932 Breganzona (CH)
(74) Representative: Zardi, Marco
(86) International application number: PCT/EP2006/012429
(87) International publication number: WO 2007/079954

(56) References cited:
- EP-A- 0 358 475
- EP-A- 0 579 942
- EP-A- 0 895 806
- EP-A- 1 419 812
- WO-A1-2004/098766
- WO-A1-2004/098770
- DE-A1- 3 040 712
- US-A- 2 987 382
- US-A- 5 407 455

## Description

### Field of application

In its most general aspect, the present invention concerns an apparatus for producing gaseous mixtures comprising hydrogen, carbon monoxide and optionally nitrogen such as synthesis gases for methanol and ammonia.

In particular, the present invention concerns an apparatus of the aforementioned type comprising a substantially cylindrical shell closed at opposite ends, at least one inlet opening for feeding a gaseous flow comprising oxygen, at least one inlet opening for feeding a gaseous flow comprising hydrocarbons, at least one outlet opening for a flow of synthesis gas, at least one burner in fluid communication with a reaction chamber for carrying out reforming reactions of the hydrocarbons and/or for partially oxidising said hydrocarbons obtaining said flow of synthesis gas, said reaction chamber being in fluid communication with said at least one outlet opening and optionally containing a suitable catalytic bed to promote said reforming reactions.

In the remainder of the description and in the subsequent claims, the term "gaseous flow comprising oxygen" generically indicates a comburent gas comprising oxygen and optionally steam and/or nitrogen, whereas the term "gaseous flow comprising hydrocarbons" indicates a combustible or process gas comprising hydrocarbons, and optionally also carbon dioxide, hydrogen, carbon monoxide and steam.

### Prior art

As it is well known, apparatuses of the aforementioned type are widely used to carry out secondary reforming or autothermal reforming of hydrocarbons (ATR) in the presence of catalyst in the aforementioned reaction chamber or partial oxidisation of hydrocarbons (POX) in the absence of catalyst, obtaining synthesis gas for the production of various chemical compounds, in particular synthesis gas for the production of ammonia and methanol.

Within the use for secondary reforming, the combustible gas generally comes from a primary reforming section where hydrocarbons, for example natural gas, fuel oil, LPG (liquid petroleum gas) or refinery gas and mixtures thereof, have been made to react with steam. Such a combustible gas generally contains light hydrocarbons (for example C₁-C₄) as well as hydrogen, carbon monoxide, carbon dioxide and steam. In the secondary reforming apparatus, the hydrocarbons are subjected to partial oxidation in a first zone of the reaction chamber beneath the burner, also known as combustion zone, with consumption of the oxygen contained in the comburent gas so obtaining a gaseous mixture. Such oxidation or combustion is highly exothermal and produces the heat necessary to promote the reforming reactions of the gaseous mixture that, instead, are endothermal, in a second zone of the reaction chamber beneath the combustion zone in which a suitable catalytic bed is installed, so as to obtain a gaseous synthesis flow comprising carbon monoxide and hydrogen.

Within the use for autothermal reforming, the partial oxidation of the hydrocarbons and the reforming with steam are combined in a single apparatus (so called autothermal reformer) without previously subjecting the hydrocarbons to primary reforming. Therefore, in this case, the combustible gas directly contains the hydrocarbons of the predetermined supply source (for example natural gas) to which carbon dioxide coming for example from a recycled gaseous flow can optionally be added and the reforming is carried out on a suitable catalytic bed.

In apparatuses intended for the partial oxidation of hydrocarbons (POX), so called partial oxidators, the feeding of the comburent and combustible gaseous flows is similar to that of an apparatus for autothermal reforming. However, in this case, the partial oxidation of hydrocarbons and optionally reforming reactions with steam are carried out together in a reaction chamber without catalyst.

It is also known that that aforementioned apparatuses operate, at least in the combustion zone, at rather high temperatures, generally 1000-1600°C and this makes it necessary to protect the metallic structure of the shell. For this purpose, the inside of the shell is lined with some layers of a refractory materials, generally made of preformed bricks or casts of refractive cements, which however has various drawbacks.

First of all, it should be noted that such refractory materials must satisfy different characteristics of resistance to high temperatures, of heat conductibility and of heat expansion coefficient, according to whether they constitute a more inner layer (therefore more subject to high temperatures) or a more outer layer (less subject to high temperatures) of the lining. This implies that the lining must necessarily consist of multiple layers of different materials.

In order to obtain a suitable resistance to high temperatures and a low heat dispersion one is also forced to make refractory linings of substantial radial thickness (300-500 mm), generally consisting of alternating layers of different materials.

Moreover, the installation of such refractory linings is very laborious requiring very long time periods and highly specialised personnel since it is necessary to arrange the bricks or cement casts in such a way to avoid the formation of channels or slits allowing the diffusion of heat and gas towards the shell.

As well as being difficult to make and install, conventional refractory linings impose substantial restrictions upon the operation of the aforementioned apparatuses. At first, after installation, a long time is needed for curing, drying and sintering of the refractory lining. In normal operation, during the heating and cooling steps of the apparatus, the presence of the refractory lining forces the adoption of suitable temperature gradients per unit time (dT/dt) that allow for the differential expansion of the various refractive layers (due to the temperature differences in the thickness of the refractory lining and to the different materials used) without the occurrence of thermal stresses greater than those acceptable for the materials. In fact, the exceeding of the maximum thermal gradient can often lead to ruinous damages to the refractory lining itself.

Indeed, it should be noted that, for example, during the heating which proceeds from the inside towards the outside of the apparatus, the thermal stresses are generated by the fact that the thermal expansion of the hotter inner layers is prevented by the outer ones.

For these reasons, the heating and cooling steps of the aforementioned apparatuses can require a number of days.

The technical problem at the basis of the present invention is that of providing an apparatus for producing synthesis gas that overcomes the aforementioned drawbacks and in particular an apparatus for producing synthesis gas that is simple to make and allows high production capacities to be obtained with low investment, operating and maintenance costs.

### Summary of the invention

Such a technical problem is solved by an apparatus for producing synthesis gas comprising a substantially cylindrical shell closed at opposite ends, at least one inlet opening for feeding a gaseous flow comprising oxygen and a gaseous flow comprising hydrocarbons, at least one outlet opening for a flow of synthesis gas, at least one burner in fluid communication with a reaction chamber for partially oxidising and/or reforming said hydrocarbons obtaining said flow of synthesis gas, the apparatus being **characterised in that** it comprises a pipe of ceramic material having a thickness of between 5 and 50 mm extended inside said shell, said pipe of ceramic material internally defining said reaction chamber.

Preferably, said pipe of ceramic material is substantially coaxial with said shell.

In the apparatus for producing synthesis gas according to the invention, an (annular) interspace is defined between the ceramic pipe and the shell, the interspace being delimited by the ceramic material outer surface and the shell inner surface.

According to an aspect of the present invention, said interspace is substantially filled with an insulating material, preferably with at least a layer of said insulating material.

The apparatus according to the invention can be used independently for secondary reforming, for autothermal reforming and for partial oxidation of hydrocarbons and it is particularly suitable for producing synthesis gas to be used for the production of methanol, ammonia or other chemicals.

In the case of use for secondary or autothermal reforming, the pipe of ceramic material contains on the inside a catalytic bed so as to separate the reaction chamber into two zones, notably a first reaction zone, in direct contact with the burner, for carrying out partial oxidation, and a second reaction zone in which there is said catalytic bed for carrying out reforming reactions.

In the apparatus according to the invention, the pipe of ceramic material has refractive properties that make it suitable for resisting the high operating temperatures, even over 1600°C, which are reached above all in the first reaction zone as a result of the exothermicity of the oxidation reactions of the hydrocarbons. Moreover, the pipe of ceramic material has a much lower thickness than that of conventional refractive coatings. According to a particularly preferred embodiment, the thickness of the pipe of ceramic material is between 20 and 50 mm.

Preferably, the ceramic material for the pipe is chosen from the group comprising refractory oxides, refractory nitrides, refractory carbides and combinations thereof.

Moreover, it should be noted that the ceramic material of the pipe intrinsically has a high capability to resist much greater thermal shocks than those that can be withstood by conventional refractory materials thanks to its low thickness and high thermal conductivity allowing the temperature gradients in the ceramic pipe to be considerably reduced, thus minimising the thermal stresses.

The insulating material may be any material of any type such as for example a fibrous material, a non-fibrous material or a mixture thereof. In addition, the insulating material can be of any suitable shape such as for example loose fibres, tape, felt, woven or unwoven fabric etc..

Preferably, the insulating material (fibrous or non-fibrous) is chosen from the group comprising refractory oxides, refractory nitrides, refractory carbides and combinations thereof.

Preferably, the insulating material (fibrous or non-fibrous) includes one or more metallic oxides chosen among alumina, silicon oxides such as silica, rare earth (lanthanides) oxides and mixtures thereof.

Most preferably, the insulating material is in the form of ceramic fibres.

The ceramic fibres may be continuous or can have a predetermined length (for example cut fibres). In addition, the ceramic fibres may contain crystalline and vitreous phases and are obtained from different materials like for example metallic oxides, metallic nitrides, metallic carbides and combinations thereof.

For example, the ceramic fibres can mainly or completely comprise fibres formed from metallic oxides like for example alumina, alumina-silica, alumina-boron oxide-silica, silica, zirconium oxide, silica- zirconium oxide, titanium oxide, titanium oxide-silica, rare earth oxides and combinations thereof.

Preferably, in the present invention, the filling comprises ceramic fibres formed from allumina and silica. Fillings of this type that are particularly preferred are the commercial products known as kaowool.

In the present invention, the insulating material has suitable high insulating and refractive properties as well as low mass due to its porosity. It is also characterized by a low mechanical resistance, i.e. it yield under load.

In this way, it is advantageously possible to suitably protect the metallic structure of the shell from the high operating temperatures, to avoid thermal stresses in the ceramic pipe and to withstand high thermal loads, all in a simple manner and with low installation costs thanks to the fact that it is no longer necessary to fix any refractory material directly onto the shell, but rather it is necessary to simply install a pipe of ceramic material with the respective insulating material filling inside the shell.

In particular, the insulating material filling, since it is yielding, it does not contrast the thermal expansions of the ceramic pipe thus neutralizing the thermal stresses that are generated during the operation of the apparatus according to the invention.

This arrangement advantageously avoids the formation of cracks or breaks in the pipe of ceramic material with a consequent increase in its useful life. Moreover, the increased resistance to thermal shocks allows the times necessary to heat and cool the apparatus according to the invention to be substantially reduced.

In the case the pipe of ceramic material and the insulating material filling have to be replaced, the removal is made just as simple as installation, to the great advantage of a reduction in costs and maintenance times.

In the apparatus according to the invention, the pipe of ceramic material is obtained through *per se* conventional procedures, in particular through procedures that foresee the extrusion and the sintering of the ceramic material or plasma deposition procedures in which the formation of tubular structures is carried out by spraying powders of a powdered ceramic material into a plasma burner kept at a temperature of 5000-10000°C, so as to melt said powders and thus make them stick together on a rotating body.

Preferably, the ceramic material used to produce the aforementioned pipe comprises sintered aluminium oxides and/or zirconium oxides and/or carbides, such as silicon carbides and/or rare earth (lanthanides) oxides.

In order to reduce the passage of gas, from the reaction chamber towards the insulating filling, through the intrinsic pores of the ceramic material, the inner surface of the ceramic pipe can be subjected to a vitrification process to eliminate surface porosity.

Preferably, the pipe of ceramic material is formed from modules of pipe pieces fitted together.

Further characteristics and advantages of the present invention shall, moreover, become clear from the following description of some preferred exemplary embodiments, given for representative and not limiting purposes with reference to the attached figures.

### Brief description of the figures

Figure 1 shows a schematic view in longitudinal section of an apparatus for producing synthesis gas according to a first embodiment of the invention,
Figure 2 shows a schematic view from above and in partial section of the apparatus of figure 1,
Figure 3 shows a schematic view in longitudinal section of an apparatus for producing synthesis gas according to a second embodiment of the invention.

### Detailed description

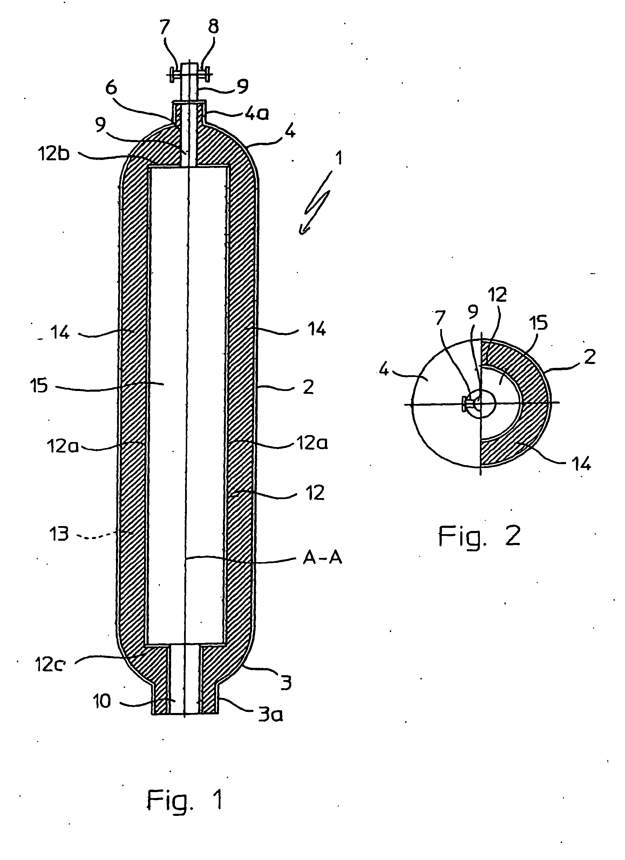

With reference to figures 1 and 2, an apparatus according to the invention for producing synthesis gas is globally indicated with 1.

The apparatus 1 can be used particularly for partial oxidation and/or reforming of hydrocarbons in the absence of catalyst and it is particularly suitable for producing synthesis gas for methanol, ammonia or other chemicals.

The apparatus 1 generally operates at temperatures of between 800-1700°C and pressures of between 5-200 bar.

The apparatus 1 comprises a substantially cylindrical shell 2 with vertical axis A-A closed at the opposite ends by respective lower bottom 3 and upper bottom 4. The upper bottom 4 is provided with a nozzle 4a having an opening for the insertion, in a suitable housing 6, of a per se conventional burner, globally indicated with 9. The body of the burner 9 projects from said nozzle 4a towards the outside of the shell 2 and ends at the top with a nozzle 7 constituting an opening for the entry of a gaseous flow comprising hydrocarbons and a nozzle 8 constituting an opening for the entry of a gaseous flow comprising oxygen.

A collector 10 for collecting synthesis gas is instead envisaged close to the lower bottom 3, said collector 10 extends in a nozzle 3a of the lower bottom and ends with a nozzle (not shown) constituting the outlet opening of the synthesis gases from the shell 2.

In accordance with the present invention, the apparatus 1 also comprises a pipe 12 of ceramic material with a smaller diameter than that of the shell 2 and coaxial with it so as to define an annular interspace 13. More specifically, the pipe 12 of ceramic material has opposite vertical walls 12a (parallel to the axis A-A of the shell 2) as well as, at the opposite ends, a upper bottom 12b and a lower bottom 12c of suitable shape, like for example flat, as shown in figure 1, hemispherical or semi-elliptical. The bottoms 12b and 12c, top and bottom respectively, are each equipped with an opening so as to place the pipe 12 of ceramic material in fluid communication at the bottom with the collector 10 for collecting the synthesis gases and at the top with the burner 9.

On the inside, the pipe 12 of ceramic material defines a reaction chamber 15 for carrying out reforming reaction and/or partial oxidation reaction of hydrocarbons, said reaction chamber 15 being delimited at the top by the upper bottom 12b of the pipe 12 and by the burner 9, and at the bottom by the lower bottom 12c of the pipe 12.

Of course, the pipe 12 of ceramic material may have any shape, i.e. it can have a circular or polygonal cross section, for example hexagonal.

In the apparatus 1, the annular interspace 13 is substantially filled by a layer 14 of ceramic fibres. In this way it is advantageously possible to adequately protect the metallic structure of the shell from high operating temperatures of the apparatus 1.

Moreover, it should be noted that the layer 14 of ceramic fibres is also provided close to the lower bottom and upper bottom 3 and 4 and in the corresponding nozzles 3a and 4a so as to advantageously protect the burner 9 and the outlet collector 10 of the synthesis gases from the high operating temperatures. As far as the operation of the apparatus 1 is concerned, a gaseous flow comprising hydrocarbons and a gaseous flow comprising oxygen entering the respective nozzles 7 and 8 is fed to the burner 9 and conveyed from it to the reaction chamber 15 of the pipe 12 of ceramic material.

In the reaction chamber 15 the partial oxidation reaction of the hydrocarbons is carried out with consumption of oxygen reaching high temperatures (1000-1700°C), due to the high exothermic content of the oxidation reactions, obtaining a "hot" gaseous mixture, i.e. with high thermal content.

Such a gaseous mixture can thus undergo, again in the reaction chamber 15, highly endothermal reforming reactions of the hydrocarbons, promoted by the reaction heat deriving from the partial oxidation. Therefore, a synthesis gas comprising carbon monoxide, hydrogen and optionally nitrogen is obtained which through the collector 10 comes out from the apparatus 1.

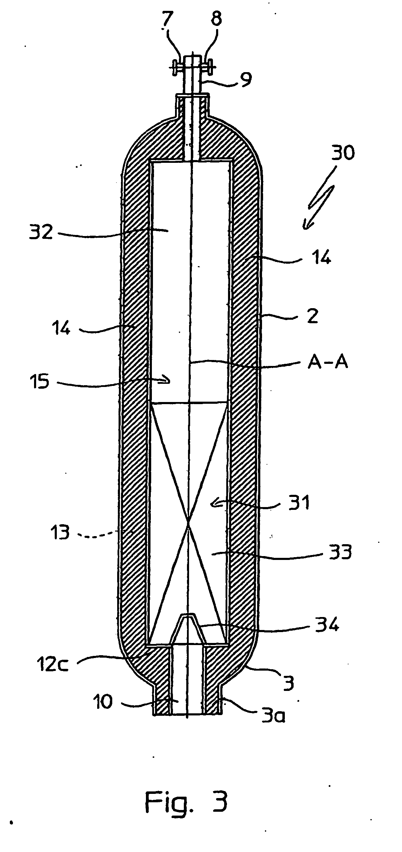

Figure 3 illustrates a further embodiment of the apparatus according to the invention for producing synthesis gas. In such a figure, structural elements that are common or functionally equivalent to those of the apparatus 1 represented in figures 1 and 2 have been given the same reference numerals.

The apparatus illustrated in figure 3, globally indicated with 30, differs from the apparatus 1 in that it has a catalytic bed 31 in a bottom portion of the pipe 12 of ceramic material suitably supported by a support element 34. In this way, the reaction chamber 15 defined by the pipe 12 of ceramic material is divided into two zones namely a first zone 32 or top zone in contact with the burner 9 and a second zone 33 or bottom zone filled with catalyst of the catalytic bed 31.

In particular, the top zone 32 is delimited at the top by the upper bottom 12b of the tube 12 and by the burner 9, and at the bottom by the maximum level reached by the catalyst, indicated by the line 31a in figure 3.

The apparatus 30 can be used particularly for obtaining synthesis gas through autothermal or secondary reforming in which the partial oxidation of the hydrocarbons is substantially carried out in the first reaction zone 32 and the reforming in the second reaction zone 33 with the aid of the catalyst of the catalytic bed 31.

The main advantage of the apparatus for producing synthesis gas according to the invention lies in the simplicity of installation and maintenance of the refractive material, consisting of the pipe of ceramic material and optionally of the outer coating, all at reduced costs compared to known apparatuses.

Another advantage of the apparatus according to the invention lies in the high capability of ceramic material pipe to resist high thermal stresses and shocks due to its low thickness and which high thermal conductivity (compared to the conventional refractory materials of the

### prior art).

A further advantage of the apparatus according to the invention lies in the capability of reducing operating costs since, thanks to the fact that capability of the filling of refractive insulating material (in particular ceramic fibres) can efficiently absorb thermal expansion of the ceramic pipe, the start up and shutdown times are greatly reduced compared to the prior art.

A further advantage of the apparatus according to the invention lies in its greater production capacity thanks to the fact that it is possible to reduce the radial thickness of the filling of refractive insulating material to a few tens of millimetres (for example 100 mm) to have adequate protection against heat of the shell, which consequently allows to increase the overall volume available for carrying out the oxidation and reforming reactions to be increased, at the same external size of the apparatus.

A still further advantage of the reforming apparatus according to the invention lies in the fact that the pipe of ceramic material and the filling of refractive insulating material have relatively low costs which allows the investment costs to be reduced.

Of course, a man skilled in the art can bring numerous modifications and variants to the apparatus according to the invention, all of which are in any case covered by the scope of protection of the following claims. For example, for some specific applications, the opening or inlet mouth for the gaseous flow comprising hydrocarbons could be envisaged on the shell instead of on the burner so as to enter the hydrocarbons directly into the reaction chamber, for example through a duct outside the burner and coaxial with it or a certain number of burners may be installed at convenient positions on the shell and/or the upper bottom of the apparatus.

## Claims

1. Apparatus (1) for producing synthesis gas comprising a substantially cylindrical shell (2) closed by opposite bottoms (3, 4), at least one inlet opening (8) for feeding a gaseous flow comprising oxygen, at least one inlet opening (7) for a gaseous flow comprising hydrocarbons and at least one outlet opening for a flow of synthesis gas and at least one burner (9) in fluid communication with a reaction chamber (15) for partially oxidising and/or reforming said hydrocarbons obtaining said flow of synthesis gas, the apparatus being **characterised In that** it comprises a pipe (12) of a ceramic material having a thickness of between 5 and 50 mm extended inside said shell (2), said pipe (12) of ceramic material internally defining said reaction chamber (15).

2. Apparatus (1) according to claim 1, **characterized in that** said pipe (12) of ceramic material Is substantially coaxial with said shell (2)

3. Apparatus (1) according to claim 1 or 2, **characterised in that** said pipe (12) of ceramic material has a thickness of between 20 and 50 mm.

4. Apparatus (1) according to any one of the previous claims, **characterised in that** the pipe (12) of ceramic material is obtained through extrusion and sintering of a ceramic material or plasma deposition procedures.

5. Apparatus (1) according to any one of the previous claims, **characterised in that** the ceramic material used to produce said pipe (12) comprises sintered aluminium oxides and/or zirconium oxides and/or carbides, such as silicon carbides and/or rare earth oxides.

6. Apparatus (1) according to any one of the previous claims, **characterised in that** said pipe (12) of ceramic material is formed from modules of pipe pieces fitted together.

7. Apparatus (1) according to any one of the previous claims, **characterised in that** said pipe (12) of ceramic material contains a catalytic bed (31) in a portion thereof so as to divide said reaction chamber (15) Into two distinct reaction zones (32, 33).

8. Apparatus (1) according to anyone of the preceding claims, **characterized in that** it further includes an interspace (13) between said pipe (12) of ceramic material and said shell (2), said interspace (13) being substantially filled with an insulating material.

9. Apparatus (1) according to anyone of the preceding claims, **characterized in that** said insulating material is a fibrous material, a non-fibrous material or a mixture thereof.

10. Apparatus (1) according to claim 9, **characterized in that** said fibrous or non-fibrous insulating material is chosen from the group comprising refractory oxides, refractory nitrides, refractory carbides and combinations thereof.

11. Apparatus (1) according to claim 9 or 10, **characterized in that** said fibrous or non-fibrous insulating material includes one or more metallic oxides chosen among alumina, silicon oxides such as silica, rare earth (lanthanides) oxides and mixtures thereof.

12. Apparatus (1) according to any one of the previous claims 8 to 11, **characterised in that** said insulating filling is in the form of loose fibres, tape, felt, woven or unwoven fabric.

13. Apparatus (1) according to any one of the previous claims 8 to 12, **characterised in that** said insulating filling is in the form of ceramic fibres.

14. Apparatus (1) according to claim 13, **characterised in that** said insulating filling comprises ceramic fibres made of alumina and silica.

15. Apparatus (1) according to any one of the previous claims, **characterised in that** said at least one burner (9) is at least partially inserted into a housing (6) formed in a nozzle (4a) of the upper bottom (4) and it is provided with said at least one inlet opening (8) for feeding a gaseous flow comprising oxygen and said at least one Inlet opening (7) for a gaseous flow comprising hydrocarbons.

## Patentansprüche

1. Vorrichtung (1) zur Herstellung von Synthesegas, die eine im Wesentlichen zylindrische Hülle (2), die durch gegenüberstehende Böden (3, 4) geschlossen Ist, zumindest eine Einlassöffnung (8) zum Einspeisen eines sauerstoffhaltigen Gasstroms, mindestens eine Einlassöffnung (7) für einen kohlenwasserstoffhaltigen Gasstrom und zumindest eine Auslassöffnung für einen Strom aus Synthesegas, sowie mindestens einen Brenner (9) aufweist, der in Fluidverbindung mit einer Reaktionskammer (15) zur teilweisen Oxidierung und/oder Reformierung der Kohlenwasserstoffe steht, wobei der Strom aus Synthesegas gewonnen wird, wobei die Vorrichtung **dadurch gekennzeichnet ist, dass** sie ein Rohr (12) aus einem keramischen Material mit einer Dicke zwischen 5 und 50 mm umfasst, das sich Innerhalb der Hülle (2) erstreckt, wobei das Rohr (12) aus keramischem Material innen die Reaktionskammer (15) umgrenzt.

2. Vorrichtung (1) nach Anspruch 1, **dadurch gekennzeichnet, dass** das Rohr (12) aus keramischem Material mit der Hülle (2) im Wesentlichen koaxial ist.

3. Vorrichtung (1) nach Anspruch 1 oder 2, **dadurch gekennzeichnet, dass** das Rohr (12) aus keramischem Material eine Dicke zwischen 20 und 50 mm hat.

4. Vorrichtung (1) nach einem der vorhergehenden Ansprüche, **dadurch gekennzeichnet, dass** das Rohr (12) aus keramischem Material durch Extrudieren und Sintern eines keramischem Materials oder durch Plasmaabscheldungsverfahren erhalten wird.

5. Vorrichtung (1) nach einem der vorhergehenden Ansprüche, **dadurch gekennzeichnet, dass** das zur Herstellung des Rohrs (12) verwendete keramische Material gesinterte Aluminiumoxide und/oder Zirkonoxide und/oder Carbide wie z.B. Siliziumcarbide und/oder Oxide von seltenen Erden umfasst.

6. Vorrichtung (1) nach einem der vorhergehenden Ansprüche, **dadurch gekennzeichnet, dass** das Rohr (12) aus keramischem Material aus Einzelteilen von Rohrstücken gebildet ist, die zusammengesetzt sind.

7. Vorrichtung (1) nach einem der vorhergehenden Ansprüche, **dadurch gekennzeichnet, dass** das Rohr (12) aus keramischem Material in einem Teilbereich von ihm ein katalytisches Bett (31) aufweist, umwdie Reaktionskammer (15) in zwei getrennte Reaktionszonen (32, 33) zu unterteilen.

8. Vorrichtung (1) nach einem der vorhergehenden Ansprüche, **dadurch gekennzeichnet, dass** sie darüber hinaus einen Zwischenraum (13) zwischen dem Rohr (12) aus keramischem Material und der Hülle (2) aufweist, wobei der Zwischenraum (13) im Wesentlichen mit einem Isoliermaterial ausgefüllt ist.

9. Vorrichtung (1) nach einem der vorhergehenden Ansprüche, **dadurch gekennzeichnet, dass** es sich bei dem Isoliermaterial um ein Fasermaterial, ein nichtfaseriges Material oder ein Gemenge aus diesen handelt.

10. Vorrichtung (1) nach Anspruch 9, **dadurch gekennzeichnet, dass** das faserförmige oder nichtfaserige Isoliermaterial aus der Gruppe ausgewählt ist, die hitzebeständige Oxide, hitzebeständige Nitride, hitzebeständige Carbide und Kombinationen hiervon umfasst.

11. Vorrichtung (1) nach Anspruch 9 oder 10, **dadurch gekennzeichnet, dass** das faserförmige oder nichtfaserige Isollermaterlal ein oder mehrere Metalloxide umfasst, das/die aus Aluminiumoxid, Siliziumoxiden wie z.B. Siliziumdioxid, Oxide von seltenen Erden (Lanthaniden) sowie Gemengen hiervon ausgewählt ist bzw. sind.

12. Vorrichtung (1) nach einem der vorhergehenden Ansprüche 8 bis 11, **dadurch gekennzeichnet, dass** das isolierende Füllmaterial in Form loser Fasern, in Bandform, als Filz, Gewebe oder Vliesstoff vorliegt.

13. Vorrichtung (1) nach einem der vorhergehenden Ansprüche 8 bis 12, **dadurch gekennzeichnet, dass** das isolierende Füllmaterial in Form keramischer Fasern vorliegt.

14. Vorrichtung (1) nach Anspruch 13, **dadurch gekennzeichnet, dass** das isolierende Füllmaterial keramische Fasern aufweist, die aus Aluminiumoxid und Siliziumdioxid hergestellt sind.

15. Vorrichtung (1) nach einem der vorhergehenden Ansprüche, **dadurch gekennzeichnet, dass** der mindestens eine Brenner (9) zumindest zum Teil in ein Gehäuse (6) eingesetzt ist, das in einer Düse (4a) des oberen Bodens (4) gebildet ist, und mit der mindestens einen Einlassöffnung (8) zum Einspeisen eines sauerstoffhaltigen Gasstroms und der mindestens einen Einlassöffnung (7) für einen kohlenwasserstoffhaltigen Gasstrom versehen ist.

## Revendications

1. Dispositif (1) pour produire du gaz de synthèse, comportant une enveloppe sensiblement cylindrique (2) fermée par des fonds opposés (3, 4), au moins une ouverture d'entrée (8) pour acheminer un écoulement gazeux comportant de l'oxygène, au moins une ouverture d'entrée (7) pour un écoulement gazeux comportant des hydrocarbures et au moins une ouverture de sortie pour un écoulement de gaz de synthèse et au moins un brûleur (9) en communication fluidique avec une chambre de réaction (15) pour oxyder partiellement et/ou reformer lesdits hydrocarbures en obtenant ledit écoulement de gaz de synthèse, le dispositif étant **caractérisé en ce qu'**il comporte un tuyau (12) en céramique ayant une épaisseur comprise entre 5 et 50 mm étendu à l'intérieur de ladite enveloppe (2), ledit tuyau (12) en céramique définissant à l'intérieur ladite chambre de réaction (15).

2. Dispositif (1) selon la revendication 1, **caractérisé en ce que** ledit tuyau (12) en céramique est sensiblement coaxial ladite enveloppe (2).

3. Dispositif (1) selon la revendication 1 ou 2, **caractérisé en ce que** ledit tuyau (12) en céramique a une épaisseur entre 20 et 50 mm.

4. Dispositif (1) selon l'une quelconque des revendications précédentes, **caractérisé en ce que** le tuyau (12) en céramique est obtenu par extrusion et frittage d'une céramique, ou par des procédés de dépôt de plasma.

5. Dispositif (1) selon l'une quelconque des revendications précédentes, **caractérisé en ce que** la céramique utilisée pour produire ledit tuyau (12) comporte des oxydes d'aluminium fritté et/ou des oxydes de zirconium et/ou des carbures, tels que des carbures de silicium, et/ou des oxydes de terres rares.

6. Dispositif (1) selon l'une quelconque des revendications précédentes, **caractérisé en ce que** ledit tuyau (12) en céramique est formé à partir de tronçons de tuyau assemblés.

7. Dispositif (1) selon l'une quelconque des revendications précédentes, **caractérisé en ce que** ledit tuyau (12) en céramique contient un lit catalytique (31) dans l'une de ses parties de manière à diviser ladite chambre de réaction (15) en deux zones de réaction distinctes (32, 33).

8. Dispositif (1) selon l'une quelconque des revendications précédentes, **caractérisé en ce qu'**il inclut également un espacement (13) entre ledit tuyau (12) en céramique et ladite enveloppe (2), ledit espacement (13) étant sensiblement rempli d'un matériau isolant.

9. Dispositif (1) selon l'une quelconque des revendications précédentes, **caractérisé en ce que** ledit matériau isolant est un matériau fibreux, un matériau non fibreux ou un mélange de ceux-ci.

10. Dispositif (1) selon la revendication 9, **caractérisé en ce que** ledit matériau isolant fibreux ou non fibreux est choisi parmi le groupe comportant des oxydes réfractaires, des nitrures réfractaires, des carbures réfractaires et des combinaisons de ceux-ci.

11. Dispositif (1) selon la revendication 9 ou 10, **caractérisé en ce que** ledit matériau isolant fibreux ou non fibreux inclut un ou plusieurs oxydes métalliques choisis parmi l'alumine, des oxydes de silicium tels que la silice, des oxydes de terres rares (lanthanides) et des mélanges de ceux-ci.

12. Dispositif (1) selon l'une quelconque des revendications 8 à 11 précédentes, **caractérisé en ce que** ledit remplissage isolant se présente sous la forme de fibres lâches, d'une bande, d'un feutre, d'un tissu ou d'un textile non-tissé.

13. Dispositif (1) selon l'une quelconque des revendications 8 à 11 précédentes, **caractérisé en ce que** ledit remplissage isolant se présente sous la forme de fibres de céramique.

14. Dispositif (1) selon la revendication 13, **caractérisé en ce que** ledit remplissage isolant comporte des fibres de céramique constituées d'alumine et de silice.

15. Dispositif (1) selon l'une quelconque des revendications précédentes, **caractérisé en ce que** ledit au moins un brûleur (9) est au moins partiellement inséré dans un boîtier (6) formé dans une buse (4a) du fond supérieur (4) et il comporte ladite au moins une ouverture d'entrée (8) destinée à acheminer un écoulement gazeux comportant de l'oxygène et ladite au moins une ouverture d'entrée (7) pour un écoulement gazeux comportant des hydrocarbures.
